# EUROPEAN PATENT APPLICATION

(11) **EP 1 785 475 A1**
(43) Date of publication of application: **16.05.2007**
(21) Application number: 06023333.5
(22) Date of filing: 09.11.2006
(51) Int. Cl.: C10M 141/12, C10M 141/10, C10N 30/06, C10N 30/08, C10N 30/10, C10N 40/04

(54) **A gear additive composition**

(30) Priority: 03.05.2006 US 417347; 09.11.2005 US 734757 P
(71) Applicant: Afton Chemical Corporation, Richmond, VA 23219 (US)
(72) Inventor: Hewette, Chep, Richmond, Virginia 23238 (US); Sheets, Roger M., Glen Allen, Virginia 23060 (US); DeGonia, David J., Midlothian, Virginia 23114 (US)
(74) Representative: Schwabe - Sandmair - Marx

(57) **Abstract**

There is disclosed herein a gear additive composition including a nitrogen-containing compound and a phosphorus-containing compound, wherein the ratio of total base number to total acid number of the gear additive composition is greater than about 0.94. There is also disclosed a gear lubricant composition having the disclosed gear additive and a reaction product of a sulfur-containing compound, a phosphorous-containing compound, and a nitrogen-containing compound. Methods of using both compositions are also disclosed.

## Description

### Related Applications

This application claims the benefit of priority of U.S. Provisional Application No. 60/734,757, filed on November 9, 2005.

### Field of the Disclosure

The present disclosure relates to a gear additive composition comprising a nitrogen-containing compound, and a phosphorus-containing compound wherein the ratio of the total base number to total acid number of the gear additive composition is greater than about 0.94. Moreover, there is disclosed a gear lubricant composition comprising a sulfur-containing, phosphorus-containing compound and/or its salt, and the gear additive composition. Further, the present disclosure relates to methods of use of the gear additive and the gear lubricant compositions.

### Background of the Disclosure

The use of phosphorous-containing compounds in lubricant compositions is known. In particular, the phosphorous-containing compounds generally comprise linear alkyl chains. However, the problem with these compounds is that they are known to be thermally unstable at elevated temperatures in a fully formulated gear lubricant. A thermally unstable compound is more likely to prematurely decompose in the lubricant composition and would no longer provide a property, such as antiwear, to the lubricant composition.

Lubricant compositions, such as gear oils, typically are subjected to elevated temperatures and therefore it would be beneficial to provide a thermally stable compound that would not prematurely decompose at higher temperatures. A thermally stable compound would therefore remain in the lubricant composition for an extended period of time and provide the property, e.g., antiwear, to the composition over the extended period of time. What is needed is a compound that has the proper thermal stability to sustain its antiwear property.

Some compounds that can provide improved antiwear to a lubricant composition may not be suitable for use in a limited slip differential because it would result in an audible noise, for example a moan. Clearly, one way to reduce the moan would be to remove the compound that creates the moan. The problem is that the lubricant composition could then also lose the benefit of the antiwear property. What is needed is a composition, such as a top treat, that would reduce and/or eliminate the moan while still allowing for the presence of the antiwear compound in the lubricant formulation.

New and advanced differential gear and transmission systems are being developed by the automotive industry. These new systems often involve high energy requirements. Therefore, component protection technology must be developed to meet the increasing energy requirements of these advanced systems.

An example of a gear apparatus is the limited slip differential. Limited slip differentials are provided in many vehicles to counteract a commonly occurring situation where one of the two driving tires or wheels is essentially void of traction. This may be in loose soil, sand, mud, or ice. In the standard open differential, the driving tire void of traction receives all of the powertrain torque, but spins without moving the vehicle in the desired direction. In a limited slip differential, a mechanism divides, or shares, a portion of the torque delivered by the powertrain with both driving wheels. By sharing the available torque, a wheel with some traction receives enough torque to move the vehicle in the desired direction. In addition, high performance vehicles have so much torque that in certain turning situations the torque on one wheel exceeds the available traction and, thus, performance suffers. The limited slip differential shares the torque between both wheels, enhancing the performance of the vehicle.

Limited slip differentials require that the lubricant for the rear axle have proper friction characteristics, and that the friction characteristics last for a sufficient elapsed mileage or duration. The proper friction characteristic is that the friction coefficient rises with increasing plate rotational speed, and falls with decreasing plate rotational speed.

To provide the proper friction characteristics and lifetime, certain additives may be added as a top treat to the gear lubricant. These additives can be selected from a wide range of friction modifiers and related compounds.

### SUMMARY OF THE DISCLOSURE

In accordance with the disclosure, a gear additive composition may comprise a nitrogen-containing compound and a phosphorus-containing compound wherein the ratio of total base number to total acid number of the gear additive composition is greater than about 0.94.

In another aspect, there is disclosed a gear lubricant composition comprising a gear additive composition comprising a nitrogen-containing compound and a phosphorus-containing compound, wherein the ratio of total base number to total acid number of the gear additive composition is greater than about 0.94; and a reaction product of a sulfur-containing compound, a phosphorus-containing compound, and a nitrogen-containing compound.

In a further aspect, there is disclosed a lubricant composition comprising a base oil; a gear additive composition comprising a nitrogen-containing compound and a phosphorus-containing compound, wherein the ratio of total base number to total acid number is greater than about 0.94; and a reaction product of a nitrogen-containing compound, a neopentyl glycol phosphite, and a sulfur-containing compound.

In yet another aspect, there is disclosed a method of manufacturing a gear lubricant composition comprising blending a base oil; a gear additive composition comprising a nitrogen-containing compound and a phosphorus-containing compound, wherein the ratio of total base number to total acid number of the gear additive composition is greater than about 0.94; and a reaction product of a sulfur-containing compound, a phosphorus-containing compound, and a nitrogen-containing compound.

Additional objects and advantages of the disclosure will be set forth in part in the description which follows, and/or can be learned by practice of the disclosure. The objects and advantages of the disclosure will be realized and attained by means of the elements and combinations particularly pointed out in the appended claims.

It is to be understood that both the foregoing general description and the following detailed description are exemplary and explanatory only and are not restrictive of the disclosure, as claimed.

### DESCRIPTION OF THE EMBODIMENTS

As used herein, the term "hydrocarbyl substituent" or "hydrocarbyl group" is used in its ordinary sense, which is well-known to those skilled in the art. Specifically, it refers to a group having a carbon atom directly attached to the remainder of the molecule and having predominantly hydrocarbon character. Examples of hydrocarbyl groups include:

(1) hydrocarbon substituents, that is, aliphatic (e.g., alkyl or alkenyl), alicyclic (e.g., cycloalkyl, cycloalkenyl) substituents, and aromatic-, aliphatic-, and alicyclic-substituted aromatic substituents, as well as cyclic substituents wherein the ring is completed through another portion of the molecule (e.g., two substituents together form an alicyclic radical);

(2) substituted hydrocarbon substituents, that is, substituents containing non-hydrocarbon groups which, in the context of this invention, do not alter the predominantly hydrocarbon substituent (e.g., halo (especially chloro and fluoro), hydroxy, alkoxy, mercapto, alkylmercapto, nitro, nitroso, and sulfoxy);

(3) hetero substituents, that is, substituents which, while having a predominantly hydrocarbon character, in the context of this invention, contain other than carbon in a ring or chain otherwise composed of carbon atoms. Heteroatoms include sulfur, oxygen, nitrogen, and encompass substituents as pyridyl, furyl, thienyl and imidazolyl. In general, no more than two, for example no more than one, non-hydrocarbon substituent will be present for every ten carbon atoms in the hydrocarbyl group; typically, there will be no non-hydrocarbon substituents in the hydrocarbyl group.

As used herein, the term "percent by weight", unless expressly stated otherwise, means the percentage the recited component represents to the weight of the entire composition.

The compositions disclosed herein can provide at least one property chosen from improved antiwear protection and reduced noise. The composition can be a gear additive composition for use as a top treat to gear lubricant compositions. Such additive compositions are particularly suitable for a wide variety of gear and/or transmission applications including, but not limited to, automotive gears, industrial gears, stationary gears, rear axles, limited slip differentials, conventional differentials, and/or automatic and manual transmissions. Further, such additive packages are suitable for use in multi-plate differentials, cone clutch differentials, torsen differentials, and/or dog clutch differentials.

It is believed that the disclosed compositions can provide at least one of the above-described properties when the gears are subjected to low and/or high temperatures and/or variable load conditions. In an aspect, the disclosed compositions can be applied to an axle that has not been broken-in for some time period or distance prior to towing. In an aspect, the light duty axle can be a hypoid gear axle. In another aspect, the disclosed composition can be applied to light duty cars, trucks and sport utility vehicles with or without limited slip mechanisms in the differential experience to improve gear wear protection. The lubricant composition can be suitably used with any friction material such as paper, steel, or carbon fiber.

The gear additive composition can comprise a nitrogen-containing compound, and a phosphorus-containing compound, wherein the ratio of the total base number to total acid number of the gear additive composition is greater than about 0.94. The gear additive composition can be used as a top treat to a gear lubricant composition comprising a sulfur-containing, phosphorus-containing compound and/or its salt. The gear additive composition can be added to a gear lubricant composition in an amount ranging from about 2 to about 10 weight percent based on the total weight of the gear lubricant composition.

Also, disclosed herein is a method of delivering the gear additive composition. In an aspect, the gear additive composition can be mixed and/or blended with a gear lubricant composition before either composition is added to a vehicle. In another aspect, the gear lubricant composition can already be present in the vehicle and the gear additive composition can be added as a top treat, i.e., it is directly applied to the vehicle, e.g., the gear, the axle, etc. (or otherwise added to the lubricant composition already present in the vehicle).

The gear additive composition can comprise a phosphorus-containing compound such as an ester of phosphonic acid The esters of phosphonic acid may be represented by the general formula: 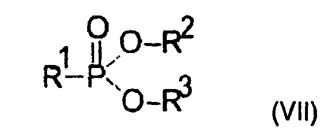 where R¹ can be a hydrocarbyl group containing from about 8 to about 24 carbon atoms, R² and R³ can be independently selected from H and a hydrocarbyl group containing from about 1 to about 8 carbon atoms.

More specifically, the esters of phosphonic acid may include a fully or partial monoester of phosphonic acid and a diester of phosphonic acid. The diester of phosphonic acid may be represented by the above formula (VII) wherein R² and R³ are independently from a hydrocarbyl group containing from about 1 to about 8 carbon atoms. The monoester of phosphonic acid may be represented by the formula: 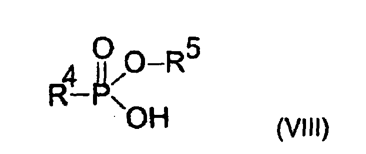 wherein R⁴ can be a hydrocarbyl group containing from about 8 to about 24 carbon atoms, and R⁵ can be selected from hydrogen and a hydrocarbyl group containing from about 1 to about 8 carbon atoms. In the above formulas (VII) and (VIII), R¹ and R⁴ may be the same hydrocarbyl group and R⁵ may be the same hydrocarbyl group as R². Accordingly, the monoester of formula (VIII) may be derived from the diester of formula (VII) by hydrolysis of the diester according to a procedure disclosed in U.S. Publication No. 2004/0230068 A1, the disclosure of which is hereby incorporated by reference. The monoester of formula (VIII) may be a fully or partially hydrolyzed ester.

Examples of monoesters of phosphonic acid include, but are not limited to, hexane phosphonic acid, octane phosphonic acid, dodecane phosphonic acid, tetradecane phosphonic acid, hexadecane phosphonic acid, pentadecane phosphonic acid, 2-methylpentane phosphonic acid, trimethylpentane phosphonic acid, octadecane phosphonic acid, ethane phosphonic acid, propane phosphonic acid, 2-methylpropane phosphonic acid, hexane phosphonic acid, n-heptyl ester, octane phosphonic acid 2-ethylhexyl ester, dodecane phosphonic acid ethyl ester, tetradecane phosphonic acid methyl ester, hexadecane phosphonic acid butyl ester, pentadecane phosphonic acid methyl ester, 2-methylpentane phosphonic acid ethyl ester, hexane phosphonic acid 4-methylpentyl-(2) ester, 2,4,4,-trimethylpentane phosphonic acid ethyl ester, octadecane phosphonic acid isopropyl ester, ethane phosphonic acid methyl ester, ethane phosphonic acid ethyl ester, ethane phosphonic acid isobutyl ester, propane phosphonic acid ethyl ester, and 2-methylpropane phosphonic acid isobutyl ester.

Examples of diesters of phosphonic acid include, but are not limited to, hexane phosphonic acid di-n-heptyl ester, octane phosphonic acid di-2-ethylhexyl ester, dodecane phosphonic acid diethyl ester, tetradecane phosphonic acid dimethyl ester, hexadecane phosphonic acid dibutyl ester, pentadecane phosphonic acid dimethyl ester, 2-methylpentane phosphonic acid diethyl ester, hexane phosphonic acid di-4-methylpentyl-(2) ester, 2,4,4,-tirmethylpentane phosphonic acid diethyl ester, octadecane phosphonic acid diisopropyl ester, ethane phosphonic acid dimethyl ester, ethane phosphonic acid diethyl ester, ethane phosphonic acid di-isobutyl ester, propane phosphonic acid diethyl ester, and 2-methylpropane phosphonic acid di-isobutyl ester. Methods for making phosphonic acid esters are described in U.S. Patent No. 2,724,718 to Siles et al. and U.S. Patent No. 3,812,222 to Kleiner et al., for example, the disclosures of both of which are hereby incorporated by reference.

In an exemplary aspect, the phosphorus-containing compound for use in the gear additive composition can be at least one of an octadecylphosphonic acid dimethyl ester and an octadecylphosphonic acid methyl ester.

A metal dithiophosphate can be prepared by reacting a metal base with at least one thiophosphorus acids, which can be mono- or dithiophosphorus acids.

The phosphorus-containing compound can also be at least one of a phosphoric acid ester or salt thereof, a reaction product of a phosphorus acid or anhydride and an unsaturated compound, and mixtures of two or more thereof.

Further, the phosphorus acid or anhydride can be reacted with an unsaturated compound, including but not limited to, amides, esters, acids, anhydrides, and ethers.

The gear additive composition can comprise a nitrogen-containing compound. Moreover, the gear lubricant composition can comprise the gear additive composition, which comprises a nitrogen-containing compound, and the reaction product of a nitrogen-containing compound, a phosphorus-containing compound, and a sulfur-containing compound. The nitrogen-containing compound can be the same or different for each composition.

Any nitrogen-containing compound can be used so long as it is soluble in the fully formulated gear lubricant composition, which can comprise a base oil. Non-limiting examples of the nitrogen-containing compound include an amide, an amine, and a heterocyclic compound comprising a basic nitrogen, such as pyridine.

The nitrogen-containing compound can be any nitrogen-containing compound, such as an amide of the structure R³CONR⁴R⁵ wherein R³, R⁴ and R⁵ can be each independently hydrogen or a hydrocarbyl group containing from about 1 to about 30 carbon atoms or an ethoxylated amide of the structure 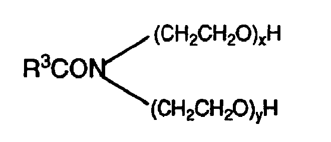 wherein the sum of x and y can be from about 1 to about 50, for example from about 1 to about 20, and as a further example from about 1 to about 10. In an aspect, when R³, R⁴ and R⁶ are hydrocarbyl groups, they contain from about 1 to about 18 carbon atoms and for example from about 1 to about 6 carbon atoms.

When R³ is hydrogen and R⁴ and R⁵ are hydrocarbyl groups, the nitrogen-containing compound is a dihydrocarbyl formamide. Non-limiting examples of dihydrocarbylformamides having utility herein include: dimethylformamide, diethylformamide, dipropylformamide, methylethylformamide, dibutylformamide, methylbutylformamide, ethylbutylformamide, dioleylformamide, distearylformamide, didecylformamide, ditridecylformamide, decyltridecylformamide, decyloleylformamide, and tridecyloleylformamide, etc.

When R³ is a hydrocarbyl group and R⁴ and R⁵ are both hydrogen, the nitrogen-containing compound is a primary hydrocarbyl amide. Non-limiting examples of primary hydrocarbyl amides include acetamide, propionamide, butyramides, valeramide, lauramide, myristamide and palmitamide. Some commercial simple fatty acid amides are available from Armak Company: coco fatty amide, octadecanamide, hydrogenated tallow fatty amide, oleamide, and 13-docosenamide.

When R³ and R⁴ are both hydrocarbyl groups and R⁵ is hydrogen, the nitrogen-containing compound is an N-substituted amide. Non-limiting examples of N-substituted amides include N-methylacetamide, N-ethylacetamide, N-methylvaleramide, N-propyllauramide, N-methyloleamide and N-butylstearamide.

When R³, R⁴ and R⁵ are all hydrocarbyl groups, the nitrogen-containing compound is an N,N-disubstituted amide. Non-limiting examples of N,N-disubstituted amides include N,N-dimethylacetamide, N-methyl-N-ethylacetamide, N,N-diethylpropionamide, N,N-dibutylvaleramide, N,N-diethylstearamide, and N,N-dimethyloleamide.

Additional non-limiting examples of the nitrogen-containing compound include N,N-bis(2-hydroxyethyl)dodecanamide, N,N-bis(2-hydroxyethyl) coco fatty acid amide, N,N-bis(2-hydroxyethyl)oleamide, N-2-hydroxyethylcocamide, and N-2-hydroxyethylstearamide.

In an exemplary aspect, the nitrogen-containing compound can be an amine, which can be primary, secondary, or tertiary.

In an aspect, the hydrocarbyl amines can be primary hydrocarbyl amines comprising from about 4 to about 30 carbon atoms in the hydrocarbyl group, and for example from about 8 to about 20 carbon atoms in the hydrocarbyl group. The hydrocarbyl group can be saturated or unsaturated. Representative examples of primary saturated amines are those known as aliphatic primary fatty amines. Typical fatty amines include alkyl amines such as n-hexylamine, n-octylamine, n-decylamine, n-dodecylamine, n-tetradecylamine, n-pentadecylamine, n-hexadecylamine, n-octadecylamine (stearyl amine), etc. These primary amines are available in both distilled and technical grades. While the distilled grade can provide a purer reaction product, amides and imides can form in reactions with the amines of technical grade. Also suitable are mixed fatty amines.

In an aspect, the nitrogen-containing compound can be an amine salt derived from tertiary-aliphatic primary amines having at least about 4 carbon atoms in the alkyl group. For the most part, they can be derived from alkyl amines having a total of less than about 30 carbon atoms in the alkyl group.

Usually the tertiary aliphatic primary amines are monoamines represented by the formula 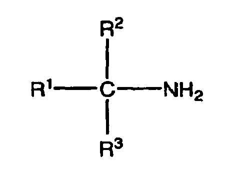 wherein R¹, R², and R³ can be the same or different and can be a hydrocarbyl group containing from about one to about 30 carbon atoms. Such amines are illustrated by tertiary-butyl amine, tertiary-hexyl primary amine, 1-methyl-1-amino-cyclohexane, tertiary-octyl primary amine, tertiary-decyl primary amine, tertiary-dodecyl primary amine, tertiary-tetradecyl primary amine, tertiary-hexadecyl primary amine, tertiary-octadecyl primary amine, tertiary-tetracosanyl primary amine, tertiary-octacosanyl primary amine.

Mixtures of amines are also useful for the purposes of this disclosure. Illustrative of amine mixtures of this type can be a mixture of C₈ -C₁₆ tertiary alkyl primary amines and a similar mixture of C₁₄ -C₂₄ tertiary alkyl primary amines. The tertiary alkyl primary amines and methods for their preparation are well known to those of ordinary skill in the art and, therefore, further discussion is unnecessary. The tertiary alkyl primary amine useful for the purposes of this disclosure and methods for their preparation are described in U.S. Pat. No. 2,945,749, which is hereby incorporated by reference for its teaching in this regard.

Primary amines in which the hydrocarbon chain comprises olefinic unsaturation also can be quite useful. Thus, the R groups can contain at least one olefinic unsaturation depending on the length of the chain, usually no more than one double bond per 10 carbon atoms. Representative amines are dodecenylamine, myristoleylamine, palmitoleylamine, oleylamine and linoleylamine.

Secondary amines include dialkylamines having two of the above alkyl groups including fatty secondary amines, and also mixed dialkylamines where R' can be a fatty amine and R" can be a lower alkyl group (1-9 carbon atoms) such as methyl, ethyl, n-propyl, i-propyl, butyl, etc., or R" can be an alkyl group bearing other nonreactive or polar substituents (CN, alkyl, carbalkoxy, amide, ether, thioether, halo, sulfoxide, sulfone). The fatty polyamine diamines can include mono-or dialkyl, symmetrical or asymmetrical ethylene diamines, propane diamines (1,2, or 1,3), and polyamine analogs of the above. Suitable fatty polyamines include N-coco-1,3-diaminopropane, N-soyaalkyl trimethylenediamine, N-tallow-1,3-diaminopropane, and N-oleyl-1,3-diaminopropane.

The nitrogen-containing compound can be present in the gear additive composition in any amount that provides the ratio of the total base number to total acid number of the gear additive composition to greater than about 0.94, for example from about 0.94 to about 1.25. The result can help reduce moan when the gear additive composition is added as a top treat to a gear lubricant composition.

As discussed above, the gear additive composition, e.g., a top treat composition, can be mixed, blended, or added to a gear lubricant composition either before or after the gear lubricant composition is present in a vehicle, such as in an axle, gear, or the like. The gear lubricant composition can comprise a sulfur-containing, phosphorus-containing compound and/or its salt, which can be oil-soluble, i.e., the hydrocarbyl chains of the salt can be of sufficient length, such as at least six carbon atoms, so that the resultant compound is soluble in the formulated composition. The incorporation of hydrophobic groups can lead to an increase in solubility in a non-polar media. Non-limiting examples of a salt of a sulfur-containing, phosphorus-containing compound include diisobutyl thiophosphoric acid C₈₋₁₆ tertiary alkyl primary amine salt, di-2-ethylhexyl-thiophosphoric acid C₈₋₁₆ tertiary alkyl primary amine salt, and neopentyl glycol thiophosphoric acid C₈₋₁₆ tertiary alkyl primary amine salt.

In an exemplary aspect, the gear lubricant composition can comprise at least one of a compound of formula (II), (III), (V), and (VI) below. 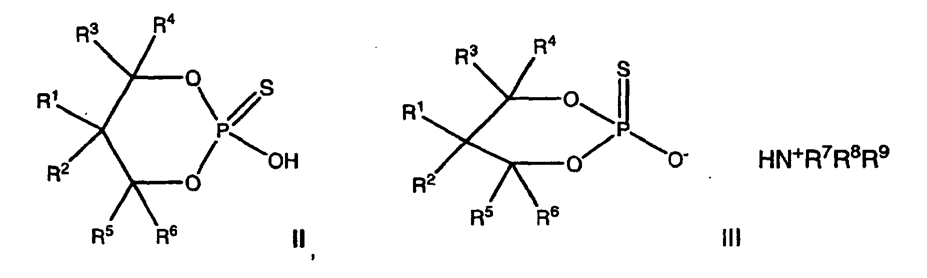 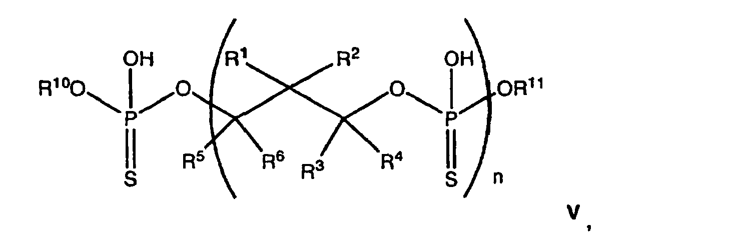 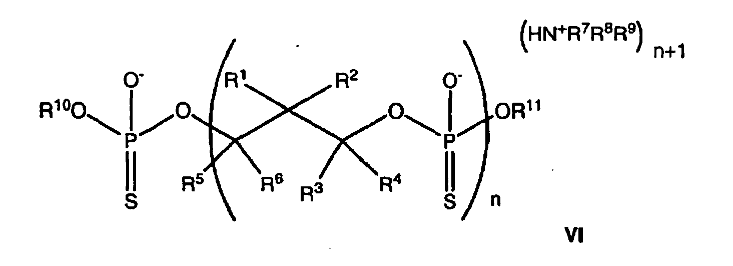 wherein n is an integer from 1 to 5; and
wherein R¹, R², R³, R⁴, R⁵, R⁶, R⁷, R⁸, R⁹, R¹⁰, and R¹¹ can be independently selected from the group consisting of hydrogen, cyano, and hydrocarbyl groups comprising from about 1 to about 30 carbon atoms, for example from about 1 to about 20 carbon atoms, and as a further example from about 1 to about 10 carbon atoms.

In an aspect, in formula (II), R¹ and R² can be methyl; and R³, R⁴, R⁵, and R⁶ can be hydrogen. In another aspect, in formula (V), R¹ and R² can be methyl; R³, R⁴, R⁵, and R⁶ can be hydrogen; and R¹⁰ and R¹¹ can be alkyl groups comprising from about 1 to about 6 carbon atoms.

In an aspect, in formula (VI), R¹ and R² can be methyl; R³, R⁴, R⁵, R⁶, R⁷, and R⁸ can be hydrogen; R⁹ can be a tertiary C₁₂₋₁₄ alkyl group; and R¹⁰ and R¹¹ can be alkyl groups comprising from about 1 to about 6 carbon atoms. In an aspect, in formula (III), R³, R⁴, R⁵, R⁶, R⁷, and R⁸ can be hydrogen; R¹ and R² can be methyl; and R⁹ can be a tertiary C₁₂₋₁₄ alkyl group.

In an exemplary aspect, a process for making at least one of compounds (III) and (VI) can comprise providing a sulfur-containing compound, a nitrogen-containing compound, and a phosphorus-containing compound. For example, U.S. Patent Application No. 11/371,787, filed March 9, 2006, the disclosure of which is hereby incorporated by reference, discloses a process wherein a nitrogen-containing compound can be an amide and the process can yield at least one of a compound of formulae (II) and (V), which can be reacted, mixed, and/or combined with an additional nitrogen-containing compound, such as an amine, to yield at least one of a compound of formulae (III) and (VI). The sulfur-containing, phosphorus-containing compound can provide improved antiwear properties as compared to a non-sulfur-containing, phosphorus-containing compound.

Moreover, U.S. Patent Application No. 11/372,443, filed March 9, 2006, the disclosure of which is hereby incorporated by reference, discloses a process wherein a nitrogen-containing compound can be an amine and the reaction, mixture and/or combination can result in complete conversion to a salt, such as the compounds of formulae (III) and (VI). The salt, such as a salt of a sulfurized neopentyl glycol phosphite, can have improved antiwear as compared to a sulfurized neopentyl glycol phosphite and a non-sulfurized neopentyl glycol phosphite.

Base oils suitable for use in formulating the disclosed compositions can be selected from any of the synthetic or mineral oils or mixtures thereof. Mineral oils include animal oils and vegetable oils (e.g., castor oil, lard oil) as well as other mineral lubricating oils such as liquid petroleum oils and solvent treated or acid-treated mineral lubricating oils of the paraffinic, naphthenic or mixed paraffinic-naphthenic types. Oils derived from coal or shale are also suitable. Further, oils derived from a gas-to-liquid process are also suitable.

The base oil can be present in a major amount, wherein "major amount" is understood to mean greater than or equal to 50%, for example from about 80 to about 98 percent by weight of the lubricant composition.

The base oil typically has a viscosity of, for example, from about 2 to about 15 cSt and, as a further example, from about 2 to about 10 cSt at 100°C. Thus, the base oils can normally have a viscosity in the range of about SAE 50 to about SAE 250, and more usually can range from about SAE 70W to about SAE 140. Suitable automotive oils also include cross-grades such as 75W-140, 80W-90, 85W-140, 85W-90, and the like.

Non-limiting examples of synthetic oils include hydrocarbon oils such as polymerized and interpolymerized olefins (e.g., polybutylenes, polypropylenes, propylene isobutylene copolymers, etc.); polyalphaolefins such as poly(1-hexenes), poly-(1-octenes), poly(1-decenes), etc. and mixtures thereof; alkylbenzenes (e.g., dodecylbenzenes, tetradecylbenzenes, di-nonylbenzenes, di-(2-ethylhexyl)benzenes, etc.); polyphenyls (e.g., biphenyls, terphenyl, alkylated polyphenyls, etc.); alkylated diphenyl ethers and alkylated diphenyl sulfides and the derivatives, analogs and homologs thereof and the like.

Alkylene oxide polymers and interpolymers and derivatives thereof where the terminal hydroxyl groups have been modified by esterification, etherification, etc., constitute another class of known synthetic oils that can be used. Such oils are exemplified by the oils prepared through polymerization of ethylene oxide or propylene oxide, the alkyl and aryl ethers of these polyoxyalkylene polymers (e.g., methylpolyisopropylene glycol ether having an average molecular weight of about 1000, diphenyl ether of polyethylene glycol having a molecular weight of about 500-1000, diethyl ether of polypropylene glycol having a molecular weight of about 1000-1500, etc.) or mono- and polycarboxylic esters thereof, for example, the acetic acid esters, mixed C₃₋₈ fatty acid esters, or the C₁₃ Oxo acid diester of tetraethylene glycol.

Another class of synthetic oils that can be used includes the esters of dicarboxylic acids (e.g., phthalic acid, succinic acid, alkyl succinic acids, alkenyl succinic acids, maleic acid, azelaic acid, suberic acid, sebacic acid, fumaric acid, adipic acid, linoleic acid dimer, malonic acid, alkyl malonic acids, alkenyl malonic acids, etc.) with a variety of alcohols (e.g., butyl alcohol, hexyl alcohol, dodecyl alcohol, 2-ethylhexyl alcohol, ethylene glycol, diethylene glycol monoether, propylene glycol, etc.) Specific examples of these esters include dibutyl adipate, di(2-ethylhexyl)sebacate, di-n-hexyl fumarate, dioctyl sebacate, diisooctyl azelate, diisodecyl azelate, dioctyl phthalate, didecyl phthalate, dieicosyl sebacate, the 2-ethylhexyl diester of linoleic acid dimer, the complex ester formed by reacting one mole of sebacic acid with two moles of tetraethylene glycol and two moles of 2-ethylhexanoic acid and the like.

Esters useful as synthetic oils also include those made from C₅₋₁₂ monocarboxylic acids and polyols and polyol ethers such as neopentyl glycol, trimethylol propane, pentaerythritol, dipentaerythritol, tripentaerythritol, etc.

Hence, the base oil used which can be used to make the compositions as described herein can be selected from any of the base oils in Groups I-V as specified in the American Petroleum Institute (API) Base Oil Interchangeability Guidelines. Such base oil groups are as follows:

Group I contain less than 90% saturates and/or greater than 0.03% sulfur and have a viscosity index greater than or equal to 80 and less than 120; Group II contain greater than or equal to 90% saturates and less than or equal to 0.03% sulfur and have a viscosity index greater than or equal to 80 and less than 120; Group III contain greater than or equal to 90% saturates and less than or equal to 0.03% sulfur and have a viscosity index greater than or equal to 120; Group IV are polyalphaolefins (PAO); and Group V include all other basestocks not included in Group I, II, III or IV.

The test methods used in defining the above groups are ASTM D2007 for saturates; ASTM D2270 for viscosity index; and one of ASTM D2622, 4294, 4927 and 3120 for sulfur.

Group IV basestocks, i.e. polyalphaolefins (PAO) include hydrogenated oligomers of an alpha-olefin, the most important methods of oligomerisation being free radical processes, Ziegler catalysis, and cationic, Friedel-Crafts catalysis.

The polyalphaolefins typically have viscosities in the range of 2 to 100 cSt at 100°C., for example 4 to 8 cSt at 100°C. They can, for example, be oligomers of branched or straight chain alpha-olefins having from about 2 to about 30 carbon atoms, non-limiting examples include polypropenes, polyisobutenes, poly-1-butenes, poly-1-hexenes, poly-1-octenes and poly-1-decene. Included are homopolymers, interpolymers and mixtures.

Regarding the balance of the basestock referred to above, a "Group I basestock" also includes a Group I basestock with which basestock(s) from one or more other groups can be admixed, provided that the resulting admixture has characteristics falling within those specified above for Group I basestocks.

Exemplary basestocks include Group I basestocks and mixtures of Group II basestocks with Group I bright stock.

Basestocks suitable for use herein can be made using a variety of different processes including but not limited to distillation, solvent refining, hydrogen processing, oligomerisation, esterification, and re-refining.

The base oil can be an oil derived from Fischer-Tropsch synthesized hydrocarbons. Fischer-Tropsch synthesized hydrocarbons can be made from synthesis gas containing H₂ and CO using a Fischer-Tropsch catalyst. Such hydrocarbons typically require further processing in order to be useful as the base oil. For example, the hydrocarbons can be hydroisomerized using processes disclosed in U.S. Pat. No. 6,103,099 or 6,180,575; hydrocracked and hydroisomerized using processes disclosed in U.S. Pat. No. 4,943,672 or 6,096,940; dewaxed using processes disclosed in U.S. Pat. No. 5,882,505; or hydroisomerized and dewaxed using processes disclosed in U.S. Pat. No. 6,013,171; 6,080,301; or 6,165,949.

Unrefined, refined and rerefined oils, either mineral or synthetic (as well as mixtures of two or more of any of these) of the type disclosed hereinabove can be used in the base oils. Unrefined oils are those obtained directly from a mineral or synthetic source without further purification treatment. For example, a shale oil obtained directly from retorting operations, a petroleum oil obtained directly from primary distillation or ester oil obtained directly from an esterification process and used without further treatment would be an unrefined oil. Refined oils are similar to the unrefined oils except they have been further treated in one or more purification steps to improve one or more properties. Many such purification techniques are known to those skilled in the art such as solvent extraction, secondary distillation, acid or base extraction, filtration, percolation, etc. Rerefined oils are obtained by processes similar to those used to obtain refined oils applied to refined oils which have been already used in service. Such rerefined oils are also known as reclaimed or reprocessed oils and often are additionally processed by techniques directed to removal of spent additives, contaminants, and oil breakdown products.

Optionally, other components can be present in the lubricant composition or additive composition. Non-limiting examples of other components include other antiwear agents, dispersants, diluents, defoamers, demulsifiers, anti-foam agents, corrosion inhibitors, extreme pressure agents, antioxidants, pour point depressants, seal swell agents, rust inhibitors, and friction modifiers.

Also disclosed herein is a method of lubricating a machine, such as an automotive gear, a stationary gearbox (including an industrial gear), and/or an axle with the disclosed lubricating composition. In an aspect, there is disclosed a method of improving antiwear protection and/or reducing moan in a machine, such as an automotive gear, a stationary gearbox (including an industrial gear), and/or an axle comprising placing the disclosed lubricating composition in the machine, such as an automotive gear, a stationary gearbox (including an industrial gear), and/or an axle. There is also disclosed a method of passing ASTM D6121, e.g., with lubrited and nonlubrited gear sets, and/or a method of maintaining GL-5 and/or SAE J2360 performance comprising lubricating a gear and/or axle with the disclosed lubricating composition.

### EXAMPLES

### Example 1 - Lubricant Composition

A gear lubricant composition was prepared using known techniques and processes. The quantities used to prepare this gear lubricant composition are provided in Table 1.

**Table 1- Gear Oil Formulation without Gear Additive Composition**

| **Component** | |
|---|---|
| Base Oil | 40-90 |
| Viscosity Index Improver (s) | 0-20 |
| Seal Swell Agent (s) | 0-10 |
| EP/AW Agent (s) | 4-7 |
| Pour Point Depressant (s) | 2.5-5 |
| Dispersant (s) | 0.5-4 |
| Nitrogen-Containing Compound | 1-2 |
| Anti-Foam Agent (s) | 0.1-2 |
| Demulsifier (s) | 0-0.5 |
| Corrosion Inhibitor (s) | 0.1-1 |
| A compound of Formula III | 0.2-1 |

A gear additive composition was prepared using known techniques and processes. The quantities used to prepare this gear additive composition are provided in Table 2. The gear additive composition can be combined with a gear lubricant composition as disclosed in Table 1 for use in a limited slip mechanism.

**Table 2 -Gear Additive Composition**

| **Component** | **Weigh** |
|---|---|
| Base Oil | 40-90 |
| Nitrogen-Containing Compound | 5-25 |
| Anti-Foam Agent (s) | 5-25 |
| Phosphonic Acid Diester | 1-6 |
| Phosphonic Acid Monoester | 0.1-3 |

### Example 2 - Moan Test

Several compositions were formulated and tested for moan and passing performance of ASTM D6121. To evaluate a gear lubricant composition for moan, the following steps were performed:
- Installed fluid into the test head of the SAE # 2 Friction Rig along with a new clutch pack
- Applied a clutch-specific pressure from about 0.25 MPa to about 5 Mpa to the limited slip clutch pack (selecting one pressure for a given test)
- Stabilized the temperature from about 10 to about 150° C (selecting one temperature for a given test)
- Rotated the clutch pack steel plates with respect to the friction plates from about 1 to about 40 rpm (selecting one rpm for a given test)
- Monitored the torque exerted from the steel plates to the friction plates in both amplitude and frequency
- Listened for audible vibration (from about 20 Hz to about 20 kHz)

Moan was demonstrated by the torque signature as well as the sound. The torque signature oscillated wildly for moaning oils/clutches, and did not oscillate for other oils/clutches.
FAIL = MOAN
PASS = NO MOAN

**Table 3 - Test Results**

| Compound of Formula III in a Gear Oil | Conventionel Limited Slip For Treet | TBN/TAN Patle of Gear Additive | | |
|---|---|---|---|---|
| 0.2-1 | 0 | 0 | FAIL | PASS |
| 0 | 2-8 | 0 | PASS | FAIL |
| 0.2-1 | 2-8 | 0.94 | FAIL | PASS |
| 0.2-1 | 2-8 | 1.01 | PASS | PASS |

Table 3 provides the results of the tests. A composition comprising a Compound of Formula III in a gear lubricant composition, such as disclosed in Table 1, was not treated with any gear additive composition. As can be seen, this composition passed the ASTM D6121, i.e., exhibited anitwear property, but made an audible moan. Moreover, a conventional gear additive composition, i.e., wherein the nitrogen-containing compound is not present in a quantity so that the ratio of total base number to total acid number of the gear additive composition is greater than about 0.94, did not make an audible moan, but did not pass the ASTM D6121, presumably because it did not exhibit sufficient antiwear. The gear lubricant composition disclosed in Table 1 treated with a conventional gear additive composition passed the ASTM D6121, but did not pass the moan test, i.e., the conventional top treat did not have an effect. Finally, the results demonstrate that a gear lubricant composition as disclosed in Table 1 treated with the disclosed gear additive composition i.e., wherein the nitrogen-containing compound is present in a quantity so that the ratio of total base number to total acid number of the gear additive composition is greater than about 0.94, did not make an audible moan and passed the ASTM D6121.

For the purposes of this specification and appended claims, unless otherwise indicated, all numbers expressing quantities, percentages or proportions, and other numerical values used in the specification and claims, are to be understood as being modified in all instances by the term "about." Accordingly, unless indicated to the contrary, the numerical parameters set forth in the following specification and attached claims are approximations that can vary depending upon the desired properties sought to be obtained by the present disclosure. At the very least, and not as an attempt to limit the application of the doctrine of equivalents to the scope of the claims, each numerical parameter should at least be construed in light of the number of reported significant digits and by applying ordinary rounding techniques.

It is noted that, as used in this specification and the appended claims, the singular forms "a," "an," and "the," include plural referents unless expressly and unequivocally limited to one referent. Thus, for example, reference to "an antioxidant " includes two or more different antioxidants. As used herein, the term "include" and its grammatical variants are intended to be non-limiting, such that recitation of items in a list is not to the exclusion of other like items that can be substituted or added to the listed items.

While particular embodiments have been described, alternatives, modifications, variations, improvements, and substantial equivalents that are or can be presently unforeseen can arise to applicants or others skilled in the art. Accordingly, the appended claims as filed and as they can be amended are intended to embrace all such alternatives, modifications variations, improvements, and substantial equivalents.

## Claims

1. A gear additive composition comprising a nitrogen-containing compound and a phosphorus-containing compound wherein the ratio of total base number to total acid number of the gear additive composition is greater than about 0.94.

2. The gear additive composition of claim 1, wherein the nitrogen-containing compound is an amine, in particular a mixture of C₁₄-C₂₄ tertiary alkyl primary amines.

3. The gear additive composition of claim 1 or 2, wherein the phosphoruscontaining compound is at least one of a dialkyl phosphonate and a monoalkyl phosphonate, in particular at least one of an octadecylphosphonic acid dimethyl ester and a octadecylphosphonic acid methyl ester.

4. The gear additive composition of anyone of claims 1 to 3, further comprising a major amount of a base oil.

5. The gear additive composition of anyone of claims 1 to 4, wherein the ratio of total base number to total acid number ranges from about 0.94 to about 1.25.

6. The gear additive composition of anyone of claims 1 to 5, wherein the additive composition is a top treat.

7. A gear lubricant composition comprising:
a gear additive composition according to anyone of claims 1 to 6; and
a reaction product of a sulfur-containing compound, a phosphorus-containing compound, and a nitrogen-containing compound.

8. The gear lubricant composition of claim 7, wherein the gear lubricant composition comprises from about 2 to about 10 percent by weight of the gear additive composition.

9. The gear lubricant composition of claim 7 or 8, wherein the reaction product is at least one of a compound of formula (III) and (VI): 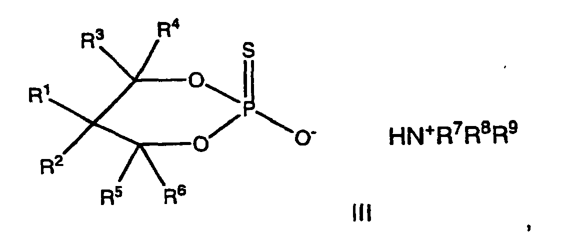 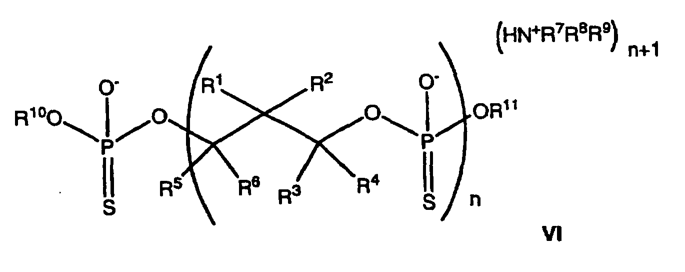 wherein n is an integer from 1 to 5; and
wherein R¹, R², R³, R⁴, R⁵, R⁶, R⁷, R⁸, R⁹, R¹⁰, and R¹¹ are independently selected from the group consisting of hydrogen, cyano, and hydrocarbyl groups comprising from about 1 to about 30 carbon atoms.

10. The gear lubricant composition of claim 9, wherein in formula (VI), R¹ and R² are methyl; R³, R⁴, R⁵, R⁶, R⁷, and R⁸ are hydrogen; R⁹ is a tertiary C₁₂₋₁₄ alkyl group; and R¹⁰ and R¹¹ are alkyl groups comprising from about 1 to about 6 carbon atoms and/or wherein in formula (III), R³, R⁴, R⁵, R⁶, R⁷, and R⁸ are hydrogen; R¹ and R² are methyl; and R⁹ is a tertiary C₁₂₋₁₄ alkyl group.

11. The gear lubricant composition of anyone of claims 7 to 10, wherein the reaction product is present in the lubricant composition in an amount ranging from about 0.25 wt.% to about 50 wt.% relative to the total weight of the lubricant composition.

12. The gear lubricant composition of anyone of claims 7 to 11, further comprising a base oil chosen from mineral, synthetic and mixtures thereof.

13. The gear lubricant composition of anyone of claims 7 to 12, further comprising at least one additive chosen from antiwear agents, dispersants, diluents, defoamers, demulsifiers, anti-foam agents, corrosion inhibitors, extreme pressure agents, antioxidants, pour point depressants, seal swell agents, rust inhibitors, and friction modifiers.

14. A method of lubricating an automotive gear comprising using as the lubricant the lubricant composition of anyone of claims 7 to 13.

15. A method of improving antiwear protection and/or reducing moan in an automotive gear comprising placing a lubricant composition according to anyone of claims 7 to 13 in the automotive gear.

16. A method of lubricating an axle comprising using as the lubricant the lubricant composition of claims 7 to 13.

17. A method of improving antiwear protection and/or reducing moan in an axle comprising placing a lubricant composition according to anyone of claims 7 to 13 in the axle.

18. A method of passing ASTM D6121 with nonlubrited and, optionally, with lubrited gear sets comprising lubricating a gear with a lubricant composition according to anyone of claims 7 to 13.

19. A method of maintaining GL-5 and/or SAE J2360 performance comprising lubricating a gear with a lubricant composition according to anyone of claims 7 to 13.

20. A lubricant composition comprising a base oil; a gear additive composition according to anyone of claims 1 to 6; and a reaction product of a nitrogen-containing compound, a neopentyl glycol phosphite, and a sulfur-containing compound.

21. The lubricant composition of claim 20, having improved antiwear as compared to neopentyl glycol phosphite.

22. A method of manufacturing a gear lubricant composition comprising blending a base oil; a gear additive composition according to anyone of claims 1 to 6; and a reaction product of a sulfur-containing compound, a phosphorus-containing compound, and a nitrogen-containing compound.

23. A method of treating an axle comprising directly applying to the axle the gear additive composition according to anyone of claims 7 to 13.

24. A method of treating a gear lubricant composition comprising directly adding to a gear lubricant composition the gear additive composition according to anyone of claims 7 to 13.
